# FASCICULE DE BREVET EUROPEEN

(11) **EP 3 336 789 B1**
(45) Date de publication et mention de la délivrance du brevet: **24.02.2021**
(21) Numéro de dépôt: 17306748.9
(22) Date de dépôt: 12.12.2017
(51) Int. Cl.: G06Q 20/34, H04L 29/06

(54) **PROCÉDÉ D'ACCÈS À DES DONNÉES PARTAGÉES DANS UNE ARBORESCENCE DE FICHIERS GÉRÉE PAR UN SYSTÈME DE FICHIERS METTANT EN OEUVRE UN MÉCANISME D'HÉRITAGE**
ZUGANGSVERFAHREN ZU VERTEILTEN DATEN IN EINEM DATEIBAUM, DER DURCH EIN DATEISYSTEM VERWALTET WIRD, DAS EINEN VERERBUNGSMECHANISMUS VERWENDET
METHOD FOR ACCESSING SHARED DATA IN A FILE TREE STRUCTURE MANAGED BY A FILE SYSTEM USING A LEGACY MECHANISM

(30) Priorité: 14.12.2016 FR 1662428
(43) Date de publication de la demande: 20.06.2018
(73) Titulaire: Idemia Identity & Security France, 92400 Courbevoie (FR)
(72) Inventeur: MARTOS, Xavier, 92130 Issy Les Moulineaux (FR); DAILLE-LEFEVRE, David, 92130 Issy Les Moulineaux (FR); GESLAIN, Raphaël, 92130 Issy Les Moulineaux (FR)
(74) Mandataire: Regimbeau

(56) Documents cités:
- US-A- 5 544 246
- US-A1- 2003 208 686
- US-A1- 2006 242 064
- US-A1- 2010 070 707
- US-A1- 2012 311 001

## Description

### DOMAINE DE L'INVENTION

La présente invention se rapporte au domaine des systèmes de fichiers informatiques.

La présente invention concerne plus particulièrement un procédé de partage de données dans une arborescence de fichiers.

### ETAT DE LA TECHNIQUE

De façon bien connue, un système de fichiers, également appelé système de gestion de fichiers, est un programme d'ordinateur configuré pour organiser le stockage de données dans une mémoire d'ordinateur.

Une arborescence de fichiers gérée par un système de fichiers comprend conventionnellement des fichiers et des répertoires. Un fichier est un objet destiné à contenir des données. Un répertoire est un objet destiné à contenir un ou plusieurs objets (fichiers et/ou sous-répertoires).

Par convention, dans le présent texte, on définit un objet (fichier ou répertoire) « contenu directement » dans un répertoire comme un objet qui n'est pas compris dans un sous-répertoire de ce répertoire. De façon plus générale, les objets dit contenus dans un répertoire dans le présent texte comprennent les objets directement contenus dans ce répertoire et les objets contenus dans des éventuels sous-répertoires de ce répertoire.

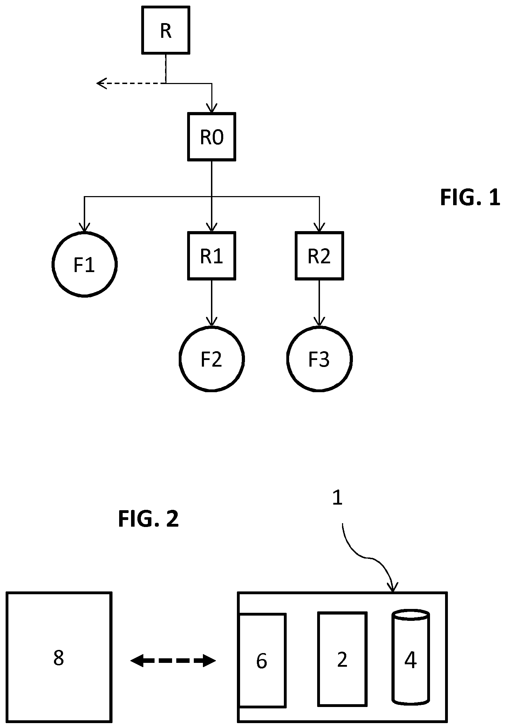

A titre d'exemple, l'arborescence de fichiers illustrée en **figure 1** comprend :
- un répertoire racine R,
- un répertoire R0 directement contenu dans le répertoire racine R,
- un fichier F1, un répertoire R1 et un répertoire R2 directement contenus dans le répertoire R0,
- un fichier F2 directement contenu dans le répertoire R1,
- un fichier F3 directement contenu dans le répertoire R2.

Chaque fichier de l'arborescence a un identifiant unique.

Chaque fichier de l'arborescence dispose par ailleurs de droits d'accès qui lui sont propres. Ces droits d'accès permettent typiquement de déterminer qui peut accéder aux données contenus dans le fichier, et quel(s) type(s) d'accès sont autorisés (écriture, lecture, etc.).

Par ailleurs, certains systèmes de fichiers particuliers, typiquement des systèmes de fichiers mis en œuvre par des cartes à puce, sont configurés pour utiliser un mécanisme d'héritage. Selon ce mécanisme, un fichier contenu directement dans un répertoire est également présenté par le système de fichiers comme étant contenu dans un sous-répertoire de ce répertoire, lors d'un accès à ce sous-répertoire.

En outre, pour traiter une commande demandant la liste des objets directement contenus dans un répertoire de référence, le système de fichiers parcourt l'arborescence depuis le répertoire de référence vers la racine, et retourne une liste comprenant non seulement les objets directement contenus dans le répertoire de référence mais également dans tout répertoire parent du répertoire de référence.

Dans l'exemple de la figure 1, en réponse à une commande demandant la liste des objets directement contenus dans le répertoire R1, le système de fichiers retourne une liste comprenant les fichiers F2 et F1 ; en réponse à une commande demandant la liste des objets directement contenus dans le répertoire R2, le système de fichiers retourne une liste comprenant des identifiants des fichiers F3 et F1. En outre, les chemins /R/R0/R1/F1 et /R/R0/R2/F1 sont considérées valides par le système de fichiers, et ce même si le fichier F1 n'est pas physiquement contenu dans l'un des répertoires R1 ou R2.

Ce mécanisme d'héritage est avantageux car permet de partager de manière hiérarchisée des données mémorisées en un seul emplacement mémoire entre plusieurs répertoires. En effet, les données du fichier F1 ne sont pas copiées physiquement dans les sous-répertoires R1 et R2.

Un utilisateur étant de la sorte informé de la présence (fictive) du fichier F1 dans l'un des répertoires R1 ou R2 peut demander un accès à ce fichier F1 depuis l'un de ces répertoires (via l'un des chemins /R/R0/R1/F1 et /R/R0/R2/F1).

Un accès peut être demandé au fichier contenant les données partagées F1 au moyen d'une commande prenant en paramètre un identifiant. Dans la norme ISO 7816-4, cet identifiant est appelé identifiant court (« Short File Identifier » en anglais abrégé en SFI). Cet identifiant court est propre au fichier F1 dans le répertoire R0 qui le contient directement. En d'autres termes, cet identifiant court est utilisé par le système de fichiers pour distinguer le fichier d'autres fichiers du même répertoire, ce qui signifie que deux fichiers se trouvant dans deux répertoires différents du système de fichiers peuvent avoir le même identifiant court.

Lorsque le système de fichiers reçoit une commande d'accès depuis le répertoire R1 avec en paramètre le SFI du fichier F1, le système de fichiers recherche tout d'abord s'il existe un fichier physiquement présent dans le répertoire R1 et possédant le SFI passé en paramètre de la commande. Si tel n'est pas le cas, il se peut que le fichier demandé soit en fait un fichier présenté comme étant dans le répertoire en vertu du mécanisme d'héritage présenté ci-dessus. Dès lors, le système de fichiers procède à une telle recherche à des niveaux supérieurs de l'arborescence jusqu'à la racine. Ici, le fichier F1 est bien trouvé dans le répertoire parent R0.

Le système de fichiers vérifie alors le respect de conditions d'accès prédéterminées au fichier F1 en fonction des droits d'accès propres au fichier F1.

Toutefois, ce procédé a pour inconvénient d'être contraignant en termes de droits d'accès à des données partagées. Si, par exemple, les droits d'accès propres au fichier F1 n'autorisent qu'une lecture seule des données contenues dans le fichier F1, un utilisateur ne pourra accéder au contenu du fichier F1 qu'en lecture seule, et ce quel que soit le répertoire depuis lequel l'utilisateur demande l'accès à ce contenu (R0, R1 ou R2).

Par ailleurs, ce procédé est également contraignant en termes d'affectation d'identifiant SFI. Il impose en effet d'utiliser le même SFI pour accéder aux mêmes données partagées depuis deux sous-répertoires différents. Or, il peut être imposé l'utilisation d'identifiants différents dans des sous-répertoires différents, notamment lorsque le contenu de ces sous-répertoires différents est normalisé par des organismes différents.

### EXPOSE DE L'INVENTION

Un but de l'invention est de permettre de rendre plus flexible le partage des données de dans une arborescence de fichiers gérée par un système de fichiers mettant en œuvre un mécanisme d'héritage.

Il est dès lors proposé un procédé d'accès à des données partagées dans une arborescence de fichiers, l'arborescence de fichiers comprenant :
- un premier fichier contenant les données à partager, le premier fichier étant caché,
- un répertoire contenant directement le premier fichier,
- une pluralité de deuxièmes fichiers,
- au moins un sous-répertoire contenu dans le répertoire et contenant la pluralité de deuxièmes fichiers, le premier fichier étant en outre présenté par héritage comme étant directement contenu dans le sous-répertoire lors d'un accès au sous-répertoire,
dans lequel chaque deuxième fichier définit un lien vers le premier fichier, et dans lequel le procédé comprend les étapes suivantes mises en œuvre lors d'une demande d'accès à un quelconque des deuxièmes fichiers:
- vérification du respect de conditions d'accès prédéterminées par la demande en fonction de droits d'accès propres au deuxième fichier,
- accès ou non au premier fichier en fonction du résultat de la vérification.

Si le premier fichier n'était pas caché, un utilisateur serait informé par le biais d'une commande demandant la liste des objets contenus dans le répertoire, que le répertoire contient (fictivement) ce premier fichier, en sus des fichiers réellement contenus dans ce répertoire, et ce en raison du mécanisme d'héritage, ce qui serait source de confusion pour cet utilisateur. Il est donc avantageux de cacher le premier fichier aux yeux de l'utilisateur, ce qui permet non seulement d'éviter cette confusion de présentation mais également d'éviter un contournement des droits d'accès propres aux deuxièmes fichiers définissant un lien vers le premier fichier conteneur de données partagées.

Le procédé ainsi proposé peut être complété à l'aide des caractéristiques suivantes, prises seules ou en combinaison lorsque cela est techniquement possible.
- le répertoire est un répertoire racine de l'arborescence de fichiers.
- Le procédé comprend, en réponse à une demande d'accès direct au premier fichier, un refus d'accès au fichier et l'émission d'un message d'erreur indiquant que le premier fichier n'a pas été trouvé.
- Le procédé comprend, en réponse à une demande de suppression du premier fichier, un refus de supprimer le premier fichier et l'émission d'un message d'erreur indiquant que le premier fichier n'a pas été trouvé.
- un deuxième fichier contient un identifiant unique du premier fichier.
- l'arborescence de fichiers étant mémorisée par un dispositif électronique, l'étape de vérification comprend une comparaison entre des données d'épreuve fournies au dispositif électronique et des données secrètes propres au dispositif électronique.

Il est également proposé, selon un deuxième aspect de l'invention, un système de fichiers comprenant des instructions de code de programme pour l'exécution des étapes du procédé l'une des revendications précédentes, lorsque ce système de fichiers est exécuté par au moins un processeur.

Il est également proposé, selon un troisième aspect de l'invention, un dispositif électronique comprenant :
- au moins un processeur configuré pour exécuter le système de fichiers selon le deuxième aspect de l'invention,
- une mémoire configurée pour mémoriser une arborescence de fichiers gérée par le système de fichiers.

Ce dispositif peut être compris dans une carte à puce.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente une arborescence de fichiers dans une mémoire.
- La figure 2 représente un dispositif électronique selon un mode de réalisation de l'invention.
- La figure 3 représente une arborescence de fichiers dans une mémoire, selon un mode de réalisation de l'invention.
- La figure 4 est un organigramme d'étapes d'un procédé d'accès à des données partagées dans une arborescence de fichiers, selon un mode de réalisation de l'invention.

Sur l'ensemble des figures, les éléments similaires portent des références identiques.

### DESCRIPTION DETAILLEE DE L'INVENTION

### A/ Dispositif électronique

En référence à la **figure 2****,** un dispositif électronique 1 comprend au moins un processeur 2 et au moins une mémoire 4.

Le processeur 2 est configuré pour exécuter un programme de type système de fichiers.

Le système de fichiers est adapté pour mettre en œuvre un mécanisme d'héritage tel que celui exposé en introduction du présent texte. Par exemple, le système de fichiers est implémenté de sorte à respecter le mécanisme d'héritage défini dans la norme ISO 7816-4.

La mémoire 4 est configurée pour mémoriser une arborescence de fichiers gérée par le système de fichiers, lorsque ce dernier est exécuté par le processeur 2. La mémoire est par exemple de type flash.

Le dispositif électronique 1 comprend en outre une interface de communication 6 avec un équipement tiers 8.

L'interface de communication 6 est par exemple un ou une pluralité de contacts électriques connectables à un ou une pluralité de contacts électriques de l'équipement tiers 8. En variante, l'interface de communication 6 est de type radio sans fil, par exemple en champ proche (NFC).

Le dispositif électronique 1 est typiquement compris dans une carte à puce.

### B/ Arborescence de fichiers mémorisés dans le dispositif électronique

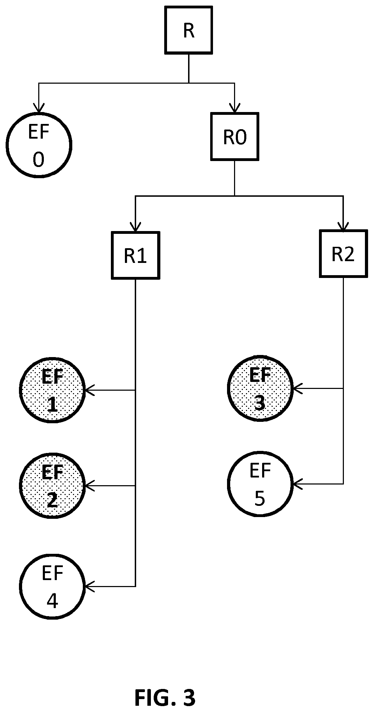

En référence à la **figure 3****,** une arborescence de fichiers mémorisée dans la mémoire 4 comprend un répertoire racine R, et au moins un sous-répertoire contenu dans le répertoire racine R, par exemple deux sous-répertoires R1 et R2 directement contenus dans un répertoire R0 lui-même directement contenu dans le répertoire racine R.

L'arborescence comprend par ailleurs des fichiers EF1 à EF5.

Chaque fichier comprend des métadonnées et une zone de stockage de données dites « utiles » (« payload »), par opposition aux métadonnées. Les métadonnées forment typiquement un entête du fichier (« header »), tandis que les données utiles sont destinées à être lues ou modifiées par un utilisateur.

Les métadonnées d'un fichier comprennent un identifiant unique propre au fichier dans le système de fichier. Cet identifiant long est utilisé par le système de fichiers pour distinguer le fichier d'autres fichiers dudit système. Dans le domaine des cartes à puces, cet identifiant est généralement appelé « identifiant long » (LID) et est typiquement codé sur 2 octets. Un identifiant long constitue une variable privée dans le sens où il n'a pas vocation à être communiqué à l'extérieur du dispositif électronique 1.

Les métadonnées d'un fichier comprennent en outre un identifiant court propre au fichier dans son répertoire (Short File Identifier en anglais, abrégé en SFI dans la norme Dans la norme ISO 7816-4). Cet identifiant court est utilisé par le système de fichiers pour distinguer le fichier d'autres fichiers du même répertoire, ce qui signifie que deux fichiers se trouvant dans deux répertoires différents du système de fichiers peuvent avoir le même identifiant court. Comme on le verra dans la suite, un identifiant court constitue une variable publique dans le sens où elle constitue un paramètre d'une commande d'accès à un fichier du dispositif électronique 1 susceptible d'être émise par l'équipement tiers 8.

Chaque fichier dispose par ailleurs de droits d'accès qui lui sont propres. A cet effet, les métadonnées d'un fichier comprennent des données représentatives de tels droits d'accès, générées au moment de la création du fichier.

Les données représentatives de droits d'accès propre à un fichier définissent un ou plusieurs modes d'accès (lecture et/ou écriture). Par exemple, le fichier EF1 dispose de droits d'accès en lecture et en écriture, tandis que les fichiers EF2, EF3 disposent de droits d'accès en lecture seule.

Les données représentatives de droits d'accès propre à un fichier peuvent en outre être adaptées pour conditionner un accès au résultat d'une authentification préalable mise en œuvre au moyen du dispositif électronique 1.

Dans un exemple de réalisation, l'authentification préalable comprend une comparaison entre des données d'épreuves (par exemple fournies au dispositif électronique 1 par l'équipement tiers 8 via l'interface de communication 6) et des données secrètes mémorisées dans la mémoire 4 du dispositif électronique 1, tel qu'un code PIN; une telle authentification est réussie lorsque les données comparées sont identiques, et échoue dans le cas contraire.

Dans un autre exemple de réalisation, l'authentification préalable comprend un traitement cryptographique vérifiant un code d'authentification de message (« Message Authentication Code » en anglais, abrégé en MAC). Le traitement cryptographique prend en entrée des données (à définir selon les spécifications) émises par l'équipement tiers 8 et leur applique un calcul cryptographique en utilisant une clé secrète partagée entre le dispositif électronique 1 et l'équipement tiers 8 ; le résultat de ce calcul est une suite de 8 octets.

Par exemple, le fichier EF2 dispose de droits d'accès conditionnés à une authentification préalable, mais ce n'est pas le cas des fichiers EF1 et EF3.

Les données représentatives de droits d'accès pour un deuxième fichier peuvent en outre définir une liste d'utilisateur sélectivement autorisés à bénéficier d'un accès.

Les métadonnées d'un fichier peuvent en outre comprendre une caractéristique de type, renseignant sur une éventuelle structure des données utile. Par exemple, les données utiles d'un fichier de type « binaire » sont des octets en vrac, chaque octet disposant d'un adresse relative dans le fichier (« offset »). En outre, les données utiles d'un fichier de type « record » sont organisées en unités présentant une taille commune prédéterminée, chaque unité étant associée à un indice.

Les métadonnées d'un fichier comprennent par ailleurs une caractéristique de visibilité, connue de l'homme du métier. Selon la valeur prise par cette caractéristique, le fichier est visible ou caché.

Les métadonnées d'un fichier comprennent d'autres caractéristiques relatives à ce fichier renseignant sur sa taille (taille des métadonnées + taille des données utiles), son nom, etc.

Les métadonnées d'un fichier comprennent en outre une caractéristique non conventionnelle, utilisée pour le partage de données dans l'arborescence de fichiers : cette caractéristique, dite « caractéristique de partage », est susceptible de prendre plusieurs valeurs différentes détaillées ci-après.

### i) Fichier conteneur de données partagées

L'arborescence comprend au moins un fichier conteneur de données à partager EF0, dit également « premier » fichier.

La caractéristique de partage du fichier conteneur EF0 a une première valeur indicative du fait que le fichier EF0 contient des données à partager.

Le fichier conteneur EF0 est directement contenu dans le répertoire racine R (on dit conventionnellement que le fichier conteneur « est à la racine »).

Le fichier conteneur EF0 est par ailleurs un fichier caché.

### ii) Fichiers de lien vers un fichier conteneur de données partagées

L'arborescence comprend par ailleurs une pluralité de fichiers EF1, EF2, EF3, dits « deuxièmes » fichiers. Chaque deuxième fichier définit un lien vers le fichier conteneur EF0.

La caractéristique de partage de chaque deuxième fichier a une deuxième valeur indicative du fait que le fichier EF1, EF2 ou EF3 définit un tel lien vers un autre fichier, la deuxième valeur étant différente de la première valeur.

Par exemple, chaque deuxième fichier contient un identifiant unique (LID) du fichier conteneur EF0 dans sa zone de stockage de données utiles.

En revanche, chaque deuxième fichier n'a pas vocation à stocker des données utiles destinées à être accédées par un tiers. Chaque deuxième fichier est donc de taille maximale petite voire très petite par rapport à la taille du fichier conteneur de données partagées.

Chaque deuxième fichier est en outre visible.

Comme on le verra dans la suite, chaque deuxième fichier est configuré pour se faire passer auprès d'un équipement tiers 8 pour le premier fichier conteneur EF0 avec lequel il est en lien.

### iii) Autres fichiers

L'arborescence peut en outre comprendre des troisièmes fichiers EF4, EF5. Ces troisièmes fichiers diffèrent des deuxièmes fichiers par le fait qu'ils ne définissent pas des liens vers le fichier conteneur EF0. Ces troisièmes fichiers sont typiquement destinés à stocker données utile non partagées. La caractéristique de partage de chaque troisième fichier a une troisième valeur différente des première et deuxième valeurs.

### C/ Commandes d'accès à l'arborescence de fichiers

Un canal de communication est établi entre l'interface de communication 6 du dispositif électronique 1 et l'équipement tiers 8.

L'équipement tiers 8 est susceptible d'émettre plusieurs types de commandes traitées par le système de fichiers et qui concernent chacune un objet de l'arborescence de fichiers gérée par le système de fichiers. Dans ce qui suit, on appelle « objet de référence » l'objet visé par une commande.

### i) Commande demandant une liste d'objets d'un répertoire

Une commande (ou une pluralité de commandes) susceptible d'être traitée par le système de fichiers est une commande demandant une liste d'objets contenus dans un répertoire de référence de l'arborescence, par exemple tous les objets directement contenus dans un répertoire de référence.

On trouve également dans certains systèmes une commande « SELECT NEXT » destinée à être invoquée plusieurs fois, et retournant un objet unique. Ainsi, une pluralité d'appels successifs à la commande « SELECT NEXT » parcourt l'arborescence fichier par fichier, et permet de manière équivalente d'obtenir une liste d'objets directement contenus dans un répertoire de référence.

Sur réception d'une telle commande, le système de fichiers met en œuvre le mécanisme d'héritage pour déterminer un ensemble de fichiers susceptibles d'être inclus dans la liste : Si le répertoire de référence est le répertoire R2, cet ensemble comprend les fichiers EF3, EF5 mais aussi le fichier EF0 situé à la racine en vertu du mécanisme d'héritage.

Le système de fichiers inspecte la caractéristique de visibilité de chaque fichier de cet ensemble. Sont inclus dans la liste les noms des fichiers sélectivement visibles de cet ensemble. Comme le fichier EF0 est caché, son nom n'est pas inclus dans la liste. La liste ne contient donc que le nom du fichier EF3, visible, voire le nom du fichier EF5 (si ce dernier est visible). La liste est ensuite retournée à l'équipement tiers 8 via l'interface de communication 6.

Ainsi, en dépit du mécanisme d'héritage mis en œuvre, l'information selon laquelle le fichier EF0 est accessible depuis le répertoire de référence R2 n'est pas donnée à l'équipement tiers 8 en réponse à une telle commande. En revanche, l'équipement tiers 8 constate la présence du fichier EF3 dans le répertoire de référence R2.

### ii) Commande d'accès à un fichier

Une autre commande susceptible d'être traitée par le système de fichiers est une commande demandant un accès aux données utiles d'un fichier de référence.

Une telle commande d'accès prend en paramètre un identifiant court (SFI) du fichier de référence.

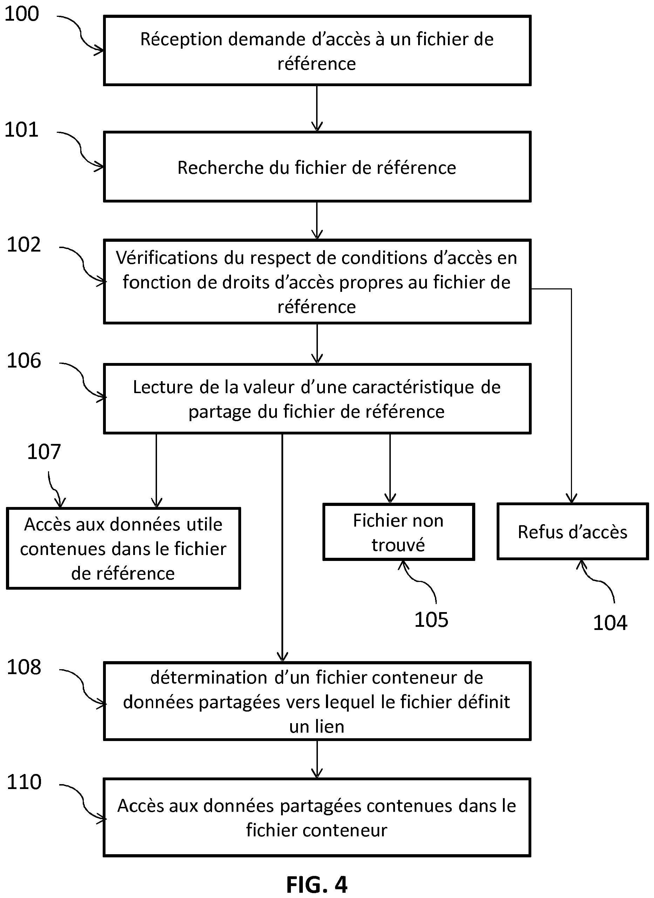

En référence à la **figure 4****,** les étapes suivantes sont mises en œuvre dans pour traiter une telle commande.

En réponse à la réception d'une telle commande (étape 100), le système de fichiers recherche le fichier possédant l'identifiant court passé en paramètre de la commande (étape 101). Comme indiqué en introduction, le système de fichiers recherche d'abord s'il existe un fichier possédant cet identifiant court dans un répertoire dit « courant ». Le répertoire courant est soit directement passé en paramètre de la commande, soit a été défini dans une commande précédente passée au système de fichiers. Si le système de fichiers ne trouve aucun fichier possédant cet identifiant court dans le répertoire courant, il procède à une recherche similaire dans le répertoire parent du répertoire courant, et ainsi de suite jusqu'à la racine, conformément au mécanisme décrit en introduction. Si, après avoir atteint la racine, le fichier de référence n'a pas été trouvé, un message d'erreur indiquant que le fichier n'a pas été trouvé est retourné à l'émetteur de la commande.

Lorsque le fichier de référence est trouvé au cours de l'étape de recherche, le système de fichiers lit dans les métadonnées du fichier de référence les données représentatives de droits d'accès.

Le système de fichiers vérifie le respect de conditions d'accès prédéterminées en fonction des droits d'accès propres au fichier de référence (étape 102).

Comme indiqué précédemment, une première condition à remplir peut être que le mode d'accès demandé (lecture ou écriture) soit identifié comme autorisé dans les données de droits d'accès propres au fichier de référence.

Une deuxième condition à remplir peut être le succès d'une authentification préalable mise en œuvre au moyen du dispositif électronique 1 visées par les droits d'accès (saisie d'un code PIN correct, comme indiqué précédemment, ou autre).

Une troisième condition peut porter sur l'identité d'un utilisateur émetteur de la commande d'accès, qui doit être agrée dans les données de droits d'accès.

Bien entendu, une ou plusieurs conditions peuvent être vérifiées au cours de l'étape de vérification, et cette ou ces conditions dépendent des données de droits d'accès présentes dans les métadonnées du fichier de référence.

Si les conditions d'accès exigées ne sont pas toutes respectées, l'accès demandé dans la commande est refusé (étape 104). Un message d'erreur peut par exemple être retourné à l'équipement tiers 8 pour l'avertir de ce refus d'accès.

Par exemple, si un accès en écriture est demandé et que le fichier de référence est le fichier EF3, l'accès demandé est refusé puisque les droits d'accès du fichier EF3 n'autorisent que des accès en lecture. Si un accès en lecture est demandé et que le fichier de référence est le fichier EF2, mais qu'il est constaté par le système de fichiers que les données d'épreuve fournies au dispositif électronique 1 sont différentes des données secrètes du dispositif électronique 1, l'accès demandé est également refusé.

Si les conditions d'accès exigées sont toutes respectées, le système de fichiers lit dans les métadonnées du fichier de référence la valeur de caractéristique de partage (étape 106).

Si cette valeur de caractéristique de partage du fichier de référence est égale à la deuxième valeur, le fichier de référence est un deuxième fichier, c'est-à-dire un fichier définissant un lien vers un fichier conteneur de données partagées. Dans ce cas, le système de fichiers recherche dans l'arborescence le fichier conteneur visé par le fichier de référence, par exemple en lisant l'identifiant unique (LID) mémorisé dans les données utiles du fichier de référence (étape 108).

La recherche mise en œuvre par le système de fichiers est restreinte au contenu de chaque répertoire parent du répertoire contenant directement le fichier de référence. Le caractère restreint de cette recherche vise à respecter des normes de sécurité, par exemple celles imposées par la norme ISO 7816-4. A titre d'exemple, dans le cas où les répertoires R1 et R2 voisins sont des répertoires utilisés par des applications concurrentes (par exemple des applications bancaires), il est désirable qu'une recherche mis en œuvre depuis l'une de ces deux sous-répertoires n'inspecte pas le contenu de l'autre sous-répertoire.

Le fait d'avoir placé le fichier conteneur de données partagées à la racine permet de garantir de trouver ce fichier, et ce quel que soit l'emplacement du fichier de référence dans l'arborescence, tout en respectant ces règles de sécurité imposées.

Un autre avantage dans ce placement à la racine est que la racine est le seul répertoire qui ne peut pas être supprimé. Il pourrait être envisagé de placer le fichier conteneur de données partagées EF0 à dans un autre répertoire parent des sous-répertoires R0 et R1 ; toutefois, cet autre répertoire parent pourrait être supprimé volontairement ou par inadvertance, entraînant ainsi la suppression du fichier conteneur des données partagées.

Ensuite, le système de fichiers accède aux données partagées contenues dans le fichier conteneur visé (étape 110).

On constate ici que l'équipement tiers 8 obtient un accès à des données partagées sans avoir directement connaissance du fichier conteneur contenant ces données partagées, ni avoir demandé explicitement un accès à ce fichier conteneur sur la base de l'identifiant court de ce fichier conteneur, ni avoir été assujetti aux droits d'accès propres à ce fichier conteneur ; en effet, ce sont les droits d'accès attachés au fichier de référence qui ont été examinés par le système de fichiers.

Si l'accès demandé est une écriture, les données partagées sont modifiées.

Si l'accès demandé est une lecture, les données partagées sont en totalité ou en partie retournées à l'équipement tiers 8.

Si la valeur de caractéristique de partage du fichier lue au cours de l'étape 106 est égale à la troisième valeur, le fichier de référence est un troisième fichier. Le système de fichiers accède alors classiquement aux données utiles du fichier de référence lui-même (étape 107).

Si la valeur de caractéristique de partage du fichier est égale à la première valeur, le fichier de référence est un fichier contenant des données partagées. On va vu précédemment qu'un tel fichier est caché. Par conséquent, un équipement tiers 8 est censé ignorer l'existence de ce fichier de référence et ne devrait donc pas émettre de commandes d'accès à ce fichier conteneur de données partagées. En particulier, l'équipement tiers 8 n'est pas censé connaître l'identifiant court propre d'un tel fichier conteneur de données partagées. Aussi, dans ce cas, l'accès au fichier conteneur de données partagées est refusé ; un message d'erreur indiquant que le fichier n'est pas trouvé est retourné (étape 105).

Les étapes qui précèdent peuvent également être mises en œuvre lors de la réception d'une commande de suppression d'un fichier de référence. Si le fichier de référence est un fichier contenant des données partagées, la suppression de ce fichier conteneur de données partagées est refusée ; un message d'erreur indiquant que le fichier n'est pas trouvé est retourné (étape 105).

Le tableau ci-dessous recense quelques exemples d'accès, pour différents fichiers de l'arborescence représentée en figure 3.

| Fichier de référence demandé | Conditions d'accès à respecter | Accès demandé | Accès autorisé ? | Fichier dont les données sont accédées |
|---|---|---|---|---|
| EF0 | Pas d'accès direct permis et invisible depuis l'extérieur | quelconque | non | - |
| EF1 | Accès en lecture ou écriture | lecture | oui | EF0 |
| EF2 | Accès en lecture + Authentification préalable réussie | écriture | non | - |
| EF2 | Accès en lecture + Authentification préalable réussie | lecture | oui | EF0 |
| EF3 | Accès en lecture | écriture | non | - |
| EF4 | Accès en lecture ou écriture | écriture | oui | EF4 |
| EF5 | Accès en lecture ou écriture | écriture | oui | EF5 |

On constate à la lecture de ce tableau que les données contenues dans le fichier EF0 sont partagées entre les répertoires R1 et R2, et qu'il est possible de définir des droits d'accès différents pour accéder à ces données partager depuis ces différents répertoires.

Bien entendu, une modification des données partagées dans le fichier conteneur EF0 en réponse à une première commande d'écriture (écriture par exemple demandé pour EF1) pourra être constatée au cours de toute demande ultérieure en lecture aboutissant à une lecture effective du contenu du fichier EF0 (lecture par exemple demandée pour le fichier EF2).

Si le fichier conteneur de données partages EF0 n'était pas caché, un utilisateur serait informé que le répertoire R1 (ou R2) contient (fictivement) le fichier EF0, en sus des fichiers réellement contenus dans ce répertoire, ce qui serait source de confusion pour l'utilisateur. Il est donc préférable de cacher le fichier EF0 aux yeux de l'utilisateur, ce qui permet non seulement d'éviter cette confusion de présentation mais également d'éviter un contournement des droits d'accès propres aux les deuxièmes fichiers définissant un lien vers le fichier conteneur de données partagées EF0.

Bien entendu, le procédé qui précède peut être mis en œuvre pour plusieurs fichiers conteneurs de données partagées présents dans l'arborescence. Chaque fichier conteneur peut alors être accédé via des deuxièmes fichiers associés à ce fichier conteneur.

### Application du procédé d'accès à la gestion de titres de transports

Dans une première application, un programme de gestion de titres de transports est configuré pour accéder au système de fichiers contenu dans le dispositif électronique (ce programme étant soit destiné à être exécuté par un processeur de l'équipement tiers ou bien le processeur du dispositif électronique lui-même).

Le répertoire R1 est associé à une première zone géographique, par exemple la région Ile-de-France, et le répertoire R2 est associé à une deuxième zone géographique, par exemple la région Bretagne.

Les fichiers EF1, EF2, EF4 contenus dans le répertoire R1 sont chacun associé à un moyen de transport disponible dans la première zone géographique (respectivement : bus, métro, tramway).

Les fichiers EF3, EF5 contenus dans le répertoire R2 sont chacun associé à un moyen de transport disponible dans la deuxième zone géographique (respectivement : bus, tramway).

Le fichier partagé EF0 contient des données représentatives d'un titre de transport virtuel pour un moyen de transport disponible dans les deux zones géographiques (ici, un ticket de bus). On suppose ici que les autorités organisatrices des transports dans les deux zones géographiques se sont mises d'accord pour partager les données représentatives d'un ticket de bus.

Cependant les modalités de modification du ticket de bus virtuel contenu dans le fichier EF0 ne sont pas les même dans les deux zone géographiques considérées :
- En Ile de France, la commande qui permet de modifier le fichier est accepté si :
   ∘ une authentification avec une borne terrain a été effectuée
- En Bretagne la commande qui permet de modifier le fichier est acceptée si l'une de ces conditions est respectée :
   ∘ une authentification avec une borne terrain a été effectuée
   ∘ une authentification serveur en ligne a été effectuée

Les droits d'accès propres aux fichiers EF1 et EF3 sont configurés pour respecter ces règles, conformément au procédé d'accès décrit précédemment.

Ainsi, il est possible de partager des tickets de bus entre les régions Ile de France et Bretagne tout en n'autorisant pas un même mode de rechargement dans ces deux régions.

### Applications du procédé d'accès dans le domaine bancaire

Dans une deuxième application, un premier programme et un deuxième programme concurrents rendant un même service ont accès au système de fichiers du dispositif électronique 1.

Les deux programmes sont par exemple des applications bancaires relatives à des moyens de paiement différents (ex : VISA® et Carte Bleue®).

Le répertoire R1 est propre au premier programme, et le répertoire R2 est propre au deuxième programme.

Les fichiers EF1, EF2, EF4 sont destinés à être accédés par le premier programme.

Les fichiers EF3, EF5 sont destinés à être accédés par le deuxième programme.

On considère que les deux programme de paiement Visa et Carte Bleue partagent le fichier de log EF0 qui permet de répertorier les caractéristiques des transactions les plus récentes mises en œuvre au moyen de l'un ou l'autre des deux programmes.

On suppose par ailleurs que les deux programmes de paiement imposent d'utiliser, pour des raisons normatives, des identifiants courts différents pour accéder aux logs contenu dans le fichier EF0.

Les fichiers EF1, EF3 sont associés respectivement à ces identifiants courts différents exigés; ils sont utilisés comme liens pour accéder au fichier de log EF0 conformément au procédé précédemment décrit.

Dans cette application, le procédé proposé alors de partager les données des fichiers de log des transactions VISA® et Carte Bleue® en dépit de la différence de ces identifiants courts.

## Revendications

1. Procédé d'accès à des données partagées dans une arborescence de fichiers, l'arborescence de fichiers comprenant :
• un premier fichier (EFO) contenant les données à partager,
• un répertoire (R) contenant directement le premier fichier,
• une pluralité de deuxièmes fichiers (EF1, EF2, EF2),
• au moins un sous-répertoire (R1, R2) contenu dans le répertoire et contenant la pluralité de deuxièmes fichiers, le premier fichier (EFO) étant en outre présenté par héritage comme étant directement contenu dans le sous-répertoire lors d'un accès au sous-répertoire (R1, R2),
le procédé étant **caractérisé en ce que** le premier fichier (EFO) est un fichier caché, **en ce que** chaque deuxième fichier (EF1, EF2, EF2) définit un lien vers le premier fichier (RO), **en ce qu'**il comprend les étapes suivantes mises en œuvre lors d'une demande d'accès à un quelconque des deuxièmes fichiers:
• vérification (102) du respect de conditions d'accès prédéterminées par la demande en fonction de droits d'accès propres au deuxième fichier,
• accès (110) ou non au premier fichier en fonction du résultat de la vérification,
et **en ce qu'**il comprend, en réponse à une demande d'accès direct au premier fichier et/ou de suppression du premier fichier, un refus d'accès au premier fichier et l'émission d'un message d'erreur indiquant que le premier fichier n'a pas été trouvé.

2. Procédé selon la revendication précédente, dans lequel le répertoire (R) est un répertoire racine de l'arborescence de fichiers.

3. Procédé selon l'une des revendications précédentes, dans lequel un deuxième fichier (EF1, EF2, EF2) contient un identifiant unique du premier fichier (EFO).

4. Procédé selon l'une des revendications précédentes, dans lequel l'arborescence de fichiers étant mémorisée par un dispositif électronique (1), l'étape de vérification (102) comprend une comparaison entre des données d'épreuve fournies au dispositif électronique et des données secrètes propres au dispositif électronique.

5. Système de fichiers comprenant des instructions de code de programme pour l'exécution des étapes du procédé l'une des revendications précédentes, lorsque ce système de fichiers est exécuté par au moins un processeur.

6. Dispositif électronique (1) comprenant :
• au moins un processeur (2) configuré pour exécuter le système de fichiers selon la revendication 5,
• une mémoire (4) configurée pour mémoriser une arborescence de fichiers gérée par le système de fichiers.

7. Carte à puce (1) comprenant un dispositif selon la revendication 6.

## Patentansprüche

1. Zugangsverfahren zu Daten, die in einem Dateienbaum geteilt werden, wobei der Dateienbaum umfasst:
• eine erste Datei (EF0), die die zu teilenden Daten enthält,
• ein Verzeichnis (R), das die erste Datei direkt enthält,
• eine Vielzahl von zweiten Dateien (EF1, EF2, EF2),
• wenigstens ein Unterverzeichnis (R1, R2), das in dem Verzeichnis enthalten ist und die Vielzahl von zweiten Dateien enthält, wobei die erste Datei (EFO) darüber hinaus per Vererben als direkt in dem Unterverzeichnis enthalten bei einem Zugang zum Unterverzeichnis (R1, R2) dargestellt wird,
wobei das Verfahren **dadurch gekennzeichnet ist, dass** die erste Datei (EFO) eine verborgene Datei ist und dass jede zweite Datei (EF1, EF2, EF2) eine Verbindung zur ersten Datei (R0) definiert, dass sie die folgenden Schritte umfasst, die bei einer Zugangsanfrage zu irgendeiner der zweiten Dateien umgesetzt werden:
• Überprüfung (102) der Beachtung von vorbestimmten Zugangsbedingungen durch die Anfrage in Abhängigkeit von der zweiten Datei eigenen Zugangsrechten,
• Zugang (110) oder nicht zur ersten Datei in Abhängigkeit von dem Ergebnis der Überprüfung
und dass sie als Antwort auf eine direkte Zugangsanfrage an die erste Datei und / oder Löschungsanfrage der ersten Datei eine Zugangsablehnung zur ersten Datei und die Ausgabe einer Fehlermeldung umfasst, die angibt, dass die erste Datei nicht gefunden wurde.

2. Verfahren gemäß dem voranstehenden Anspruch, bei dem das Verzeichnis (R) ein Hauptverzeichnis des Dateienbaums ist.

3. Verfahren gemäß einem der voranstehenden Ansprüche, bei dem eine zweite Datei (EF1, EF2, EF2) eine einzigartige Kennung der ersten Datei (EFO) enthält.

4. Verfahren gemäß einem der voranstehenden Ansprüche, bei dem der Dateienbaum durch eine elektronische Vorrichtung (1) gespeichert ist, der Überprüfungsschritt (102) einen Vergleich zwischen den Testdaten, die der elektronischen Vorrichtung geliefert werden, und den geheimen Daten, die der elektronischen Vorrichtung zu eigen sind, umfasst.

5. Dateiensystem, umfassend Programmcode-Anweisungen für die Ausführung der Schritte des Verfahrens einer der voranstehenden Ansprüche, wenn dieses Dateiensystem durch wenigstens einen Prozessor ausgeführt ist.

6. Elektronische Vorrichtung (1), umfassend:
• wenigstens einen Prozessor (2), der zum Ausführen des Dateiensystems gemäß Anspruch 5 ausgestaltet ist,
• einen Speicher (4), der zum Speichern eines Dateienbaums ausgestaltet ist, der von dem Dateiensystem verwaltet ist.

7. Chipkarte (1), umfassend eine Vorrichtung gemäß Anspruch 6.

## Claims

1. A method for accessing shared data in a file tree, the file tree comprising:
• a first file (EFO) containing data to be shared,
• a directory (R) directly containing the first file,
• a plurality of second files (EF1, EF2, EF2),
• at least one sub-directory (R1, R2) contained in the directory and containing the plurality of second files, the first file (EFO) being further presented by inheritance as being directly contained in the sub-directory upon accessing the sub-directory (R1, R2), the method being **characterised in that** the first file (EFO) is a hidden file, **in that** each second file (EF1, EF2, EF2) defines a link to the first file (R0), **in that** it comprises the following steps implemented during an access request to any of the second files:
• checking (102) that predetermined access conditions are fulfilled by the request according to access rights specific to the second file,
• accessing (110) or not the first file depending on the checking result,
and **in that** it comprises, in response to a request for direct access to the first file and/or for deletion of the first file, a denial of access to the first file and issuing an error message indicating that the first file has not been found.

2. The method according to the previous claim, wherein the directory (R) is a root directory of the file tree.

3. The method according to one of the previous claims, wherein a second file (EF1, EF2, EF2) contains a unique identifier of the first file (EF0).

4. The method according to one of the previous claims, wherein as the file tree is stored by an electronic device (1), the checking step (102) comprises comparing test data supplied to the electronic device and secret data specific to the electronic device.

5. A file system comprising program code instructions for executing steps of the method of one of the previous claims, when this file system is executed by at least one processor.

6. An electronic device (1) comprising:
• at least one processor (2) configured to execute the file system according to claim 5,
• a memory (4) configured to store a file tree managed by the file system.

7. A chip card (1) comprising a device according to claim 6.
